# EUROPÄISCHE PATENTSCHRIFT

(11) **EP 0 722 263 B1**
(45) Veröffentlichungstag und Bekanntmachung des Hinweises auf die Patenterteilung: **30.06.1999**
(21) Anmeldenummer: 95100450.6
(22) Anmeldetag: 13.01.1995
(51) Int. Cl.: H05B 41/29

(54) **Schaltungsanordnung zur Wendelvorheizung von Leuchstofflampen**
Preheating circuit for the cathodes of a fluorescent lamp
Circuit pour le préchauffage des électrodes d'une lampe fluorescente

(43) Veröffentlichungstag der Anmeldung: 17.07.1996
(73) Patentinhaber: SIEMENS AKTIENGESELLSCHAFT, 80333 München (DE)
(72) Erfinder: Krummel, Peter, D-83301 Traunreut (DE)

(56) Entgegenhaltungen:
- EP-A- 0 490 330
- DE-A- 3 437 554
- DE-A- 3 841 095

## Beschreibung

Die Erfindung bezieht sich auf eine Schaltungsanordnung zum Vorheizen der Wendeln von mindestens einer Leuchtstofflampe gemäß dem Oberbegriff des Patentanspruches 1.

Schaltungsanordnungen der genannten Art sind beispielsweise aus DE-C2-31 52 951 bekannt. Vielfach ist es in Verbindung mit elektronischen Vorschaltgeraten, von denen die genannte Schaltung einen Teil bildet, üblich, vor dem eigentlichen Lampenstart die Wendeln bzw. Elektroden der anzuschaltenden Leuchtstofflampe auf Emissionstemperatur aufzuheizen und dadurch eine die Leuchtstofflampe schonende Zündung vorzubereiten. Es ist wohl unmittelbar einleuchtend, diese Vorheizphase möglichst kurz zu bemessen, weil ja gerade mit elektronischen Vorschaltgeraten unter anderem angestrebt wird, die Leuchtstofflampe möglichst verzögerungslos mit dem Anlegen der Netzspannung an das Vorschaltgerät zu zünden. Da zum Aufheizen der Wendeln der Leuchtstofflampe auf Emissionstemperatur eine bestimmte Energiemenge notwendig ist, wäre es demnach erforderlich, den Heizstrom möglichst hoch zu bemessen.

Schaltungsmäßig bestehen zwar viele Möglichkeiten, in elektronischen Vorschaltgeraten bestimmte Funktionen bei entsprechendem Schaltungsaufwand zu realisieren. Aus wirtschaftlichen Gründen sind aber schaltungsaufwendige Ausführungsformen auf dem Markt nur beschränkt durchsetzbar.

In der derzeit kostengünstigsten schaltungstechnischen Ausgestaltung bekannter elektronischer Vorschaltgerate wird ein Lastkreis verwendet, der normalerweise einen Serienresonanzkreis mit Lampendrossel und Zündkondensator umfaßt. In diesem Lastkreis sind die Elektroden bzw. Wendeln der Leuchtstofflampe - wenn man sich hier der Einfachheit halber auf ein 1-lampiges Vorschaltgerät bezieht - in Serie geschaltet. Diesen Lastkreis treibt eine Halbbrückenanordnung bestehend aus zwei in Serie geschalteten Halbleiterschaltern, deren gemeinsamer Verbindungspunkt den Ausgang der Halbbrückenanordnung bildet, an dem eine Halbbrückenspannung in Form einer hochfrequenten Rechteckimpulsfolge erzeugt und an den Lastkreis abgegeben wird. Aus Kostengründen werden als Schalter für die Halbbrückenanordnung meist bipolare Leistungstransistoren verwendet. Die Halbbrückenanordnung wird über einen Steuertransformator und Basisbeschaltungen für ihre Schalter synchronisiert, so daß die beiden Schalter alternativ mit einer kurzen Schaltpause aktiviert sind.

Diese Halbbrückenanordnung treibt den Lastkreis bei Zündung und Normalbetrieb, ist kostengünstig, hat aber den großen Nachteil, daß sie nur mit Aufwand in der Frequenz beeinflußbar ist. Frequenzänderungen der Halbbrückenspannung sind aber zur Anpassung an die bestimmten Lampenfunktionen bei verschiedenen Betriebszuständen, wie Vorheizen, Zünden oder Normalbetrieb, erforderlich. Ein weiterer Nachteil dieser hier diskutierten Lösung besteht darin, daß der Strom im Resonanzkreis direkt mit der an der Lampe anliegenden Spannung verknüpft ist und in diesem Fall während der Vorheizphase dann der Vorheizstrom ist. Dies bedeutet, ein relativ hoher Vorheizstrom, der Voraussetzung für eine schnelle Aufheizung der Elektroden der Leuchtstofflampe ist, bedingt zugleich eine entsprechend hohe Lampenspannung. Diese Lampenspannung ist aber in dieser Vorheizphase zu begrenzen, um vorzeitige Zündversuche der Leuchtstofflampe auszuschließen. Mit der bekannten Schaltung lassen sich daher Vorheizzeiten nur in der Größenordnung von ca. 1,5 bis 2 s erreichen. Im Zusammenhang wäre weiterhin zu berücksichtigen, daß schließlich auch Sicherheitsaspekte wie das Verhindern gefährlicher Spannungen bei einem Lampenwechsel unter Netzspannung, aber auch andere Funktionen, wie z. B. ein automatisches Wiederzünden einer ausgewechselten Lampe eine Rolle spielen.

Anstatt der in der genannten DE-C2-31 52 951 beschriebenen Lösung die Frequenz der Halbbrückenanordnung während der Vorheizzeit mit Hilfe eines Sättigungstransformators umzusteuern, der eine zusätzliche Sekundärwicklung aufweist, die während der Vorheizzeit kurzgeschlossen ist, wäre es auch denkbar, einen Kaltleiter im Vorheizkreis anzuordnen, um mit diesem die Resonanzkapazität des Lastkreises während der Vorheizphase umzuschalten. Diese an sich kostengünstige Lösung hat zunächst den Nachteil, daß sie im Dauerbetrieb erhebliche Zusatzverluste bedingt und somit die Leistungsfähigkeit des Systems, bestehend aus Leuchtstofflampe und Vorschaltgerät, verschlechtert. Weiterhin wäre ein solcher Kaltleiter, da dauernd belastet, auch eines der Elemente, die die Lebensdauer eines elektronischen Vorschaltgerätes wesentlich bestimmen. Schließlich aber könnten auch mit dieser Schaltungsvariante kürzere Vorheizzeiten als etwa 0,5 s auch nicht realisiert werden.

Der Erfindung liegt daher die Aufgabe zugrunde, für eine Schaltungsanordnung der eingangs genannten Art eine weitere Lösung anzugeben, mit der es auf einfache Weise und in einer kostengünstigen Schaltungsausführung möglich ist, die Voraussetzungen für eine sichere und schnelle Vorheizung der Wendeln der Leuchtstofflampe zu schaffen.

Diese Aufgabe wird bei einer Schaltungsanordnung der eingangs genannten Art erfindungsgemäß mit den im Kennzeichen des Patentanspruches 1 beschriebenen Merkmalen gelöst.

Bei dem heute für die Herstellung elektronischer Vorschaltgerate bestehenden Kostendruck ist die Wirtschaftlichkeit der erfindungsgemäßen Lösung von größter Bedeutung. Diese besteht nicht nur darin, daß der Bauteileaufwand bei der erfindungsgemäßen Lösung verhältnismäßig gering ist und sich nicht halten läßt, weil kostengünstige Bauteile eingesetzt werden können, vielmehr bietet diese Lösung auch die Möglichkeit, in einer weiteren Ausgestaltung trotz der festgelegten relativ niedrigen Lampenspannung während der Vorheizphase die Wendeln der angeschlossenen Leuchtstofflampe bei hohem Heizstrom rasch auf Emissionstemperatur aufzuheizen. Somit bietet die erfindungsgemäße Lösung die Möglichkeit, bisher nicht erreichte Vorheizzeiten in einem Bereich von kleiner als 0,5 s zu realisieren.

Gemäß einer der Weiterbildungen der Erfindung wird dies dadurch erreicht, daß die aufzuheizenden Wendeln der Leuchtstofflampe individuell transformatorgekoppelt an die Halbbrückenspannung angeschlossen werden, wobei sich über das Windungsverhältnis der Transformatorkopplung die Hohe des Heizstromes einstellen läßt.

Schließlich ist es bei der wegen hoher Montagekosten sich auch bei elektronischen Vorschaltgeraten immer stärker durchsetzenden Integrationsdichte ebenso wichtig, daß die erfindungsgemäße Lösung in weitem Umfang ohne weiteres in einen Hochvolt-Integrationsschaltkreis einzubeziehen ist. Und nicht zu vergessen ist, daß die erfindungsgemäße Lösung sowohl den obengenannten Sicherheitsaspekten genügt als auch Sonderfunktionen, wie z. B. automatisches Wiederzünden nach einem Lampenwechsel sowie eine Lampenüberwachung auf bestimmte Betriebszustände der angeschlossenen Leuchtstofflampe ermöglicht.

Ausführungsbeispiele der Erfindung werden im folgenden anhand der Zeichnung näher erläutert. Dabei zeigt:

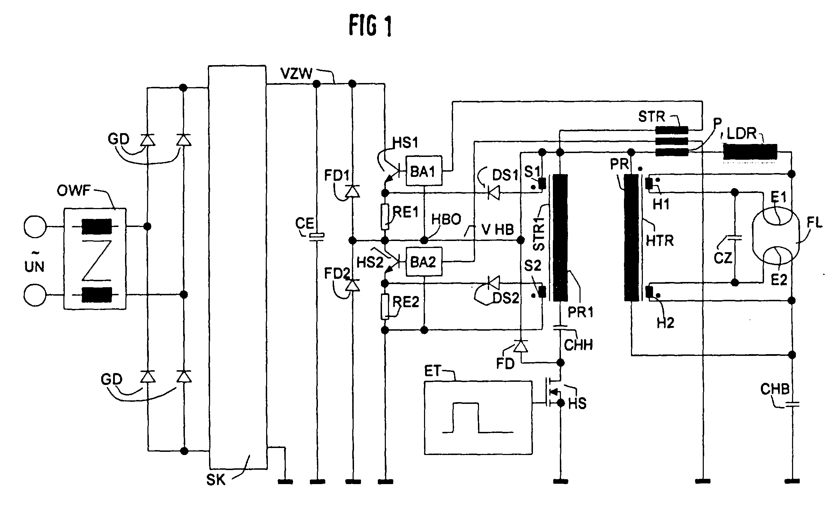

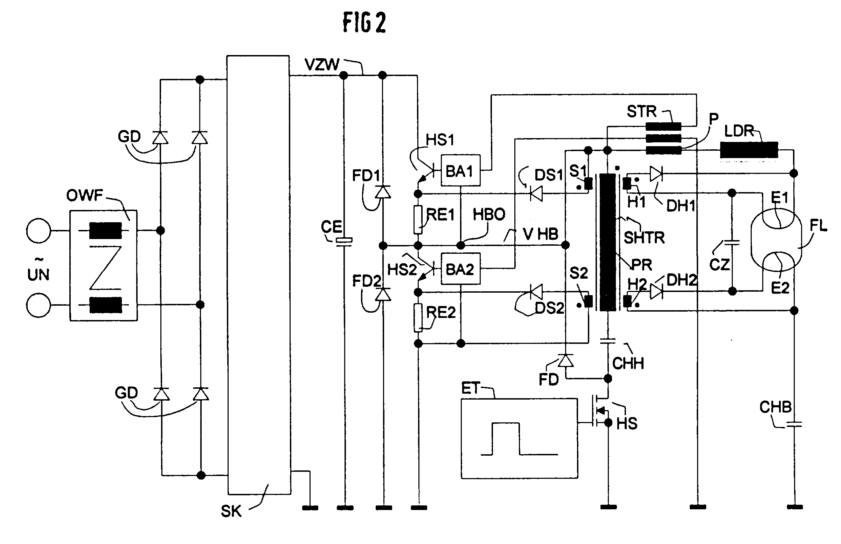

Figur 1 eine erste Ausführungsform einer Schaltungsanordnung für eine schnelle Wendelvorheizung in einem elektronischen Vorschaltgerät mit einer während der Vorheizzeit aktivierbaren Frequenzsteuereinrichtung, die im wesentlichen durch einen an Halbbrückenspannung liegenden Steuertransformator realisiert ist und mit einem vom eigentlichen Lastkreis getrennten Heizkreis für die Wendeln der Leuchtstofflampe, der als wesentliches Element einen Heiztransformator umfaßt und Figur 2 als weitere Ausführungsform eine Schaltungsvariante zu der Schaltung von Figur 1, in der der Steuertransformator und der Heiztransformator in Form einer Transformatoranordnung mit gemeinsamer Primärwicklung ausgeführt ist.

Das in Figur 1 dargestellte elektronische Vorschaltgerät ist teilweise als Blockschaltbild wiedergegeben, als bekannt vorauszusetzende und im gegebenen Zusammenhang unwesentliche Schaltungsteile sind nur schematisch angedeutet.

So ist an ein Wechselstromnetz ein Oberwellenfilter OWF angeschlossen, das mit einer Brückenanordnung von Gleichrichterdioden GD verbunden ist, in der die gefilterte Netzwechselspannung gleichgerichtet wird. Die so erzeugte Gleichspannung wird einer Sinuskorrekturschaltung SK zugeführt und auf diese Weise aus der Netzspannung eine als Zwischenkreisspannung VZW bezeichnete Gleichspannung erzeugt, die hier über einen Elektrolytkondensator CE gestützt wird.

Diese Zwischenkreisspannung VZW wird einer Halbbrückenanordnung bestehend aus zwei in Serie zueinander geschalteten Transistorschaltern HS1 bzw. HS2 zugeführt, die andererseits auf Massebezugspotential gelegt ist. Beiden Transistorschaltern HS1, HS2 ist jeweils ein Emitterwiderstand RE1 bzw. RE2 zugeordnet. Der gemeinsame Verbindungspunkt dieser beiden Transistorschalter HS1, HS2 bildet den Ausgang HBO der Halbbrückenanordnung. Weiterhin ist im Ansteuerkreis der Transistorschalter HS1, HS2 jeweils eine Basisanpassung BA1 bzw. BA2 vorgesehen, mit denen die Basisströme der Transistorschalter HS1 bzw. HS2 optimiert werden. Die Transistorschalter HS1 bzw. HS2 werden über einen Steuertransformator STR wechselweise ein- bzw. ausgeschaltet. Dazu ist die Primärwicklung dieses Steuertransformators STR an den Ausgang HBO der Halbbrückenanordnung angeschlossen und - wie noch erläutert wird - an ihrem anderen Ende mit dem Lastkreis der Leuchtstofflampe FL verbunden. Zwei Sekundärwicklungen dieses Steuertransformators STR sind einerseits jeweils mit einer der Basisanpassungen BA1 bzw. BA2 verbunden und andererseits an den Ausgang HBO der Halbbrückenanordnung angeschlossen bzw. auf Massebezugspotential gelegt. Von der am Ausgang HBO erzeugten Halbbrückenspannung VHB, die die Quellspannung für den angeschlossenen Lampenlastkreis bildet, werden so mit Hilfe des Steuertransformators STR die den Basisanpassungen BA1 bzw. BA2 zugeführten Steuerspannungen für die alternativ einzuschaltenden Transistorschalter HS1 bzw. HS2 erzeugt, wobei die Emitterwiderstände RE1 bzw. RE2 aus dem über die Halbbrückenanordnung fließenden Strom jeweils eine Gegenspannung zum Ausschalten des zugeordneten Transistorschalters HS1 bzw. HS2 erzeugen.

Auf diese Weise wird die Halbbrückenspannung VHB in Form einer Rechteckimpulsfolge definierter Frequenz erzeugt. Diese wird dem eigentlichen Lastkreis, bestehend aus einer Lampendrossel LDR, der zu betreibenden Leuchtstofflampe FL mit heizbaren Elektroden El, E2 und einem Halbbrückenkondensator CHB, zugeführt, der andererseits an Massebezugspotential liegt.

Insoweit als vollständig beschrieben, ist die Schaltungsanordnung als solche an sich bekannt und bedarf deshalb auch keiner Detailerläuterungen hinsichtlich ihrer Funktion. Aufbauend auf dieser bekannten Schaltung sind in dem Ausführungsbeispiel gemäß Figur 1 an den Ausgang HBO der Halbbrückenanordnung HS1, HS2 zwei weitere Transformatoren STR1 bzw. HTR angeschlossen. Der eine dieser Transformatoren stellt einen weiteren Steuertransformator STR1 dar, dessen Primärwicklung PR1 einerseits am Ausgang HBO der Halbbrückenanordnung liegt und andererseits über einen Entkoppelkondensator CHH sowie die Schaltstrecke eines Schalttransistors HS auf Massebezugspotential gelegt ist. Weiterhin ist ein Zeitschaltkreis ET vorgesehen, der an den Steuereingang des Schalttransistors HS angeschlossen ist. Dieser weitere Steuertransformator STR1 besitzt zwei gegensinnig gewickelte Sekundärwindungen S1 bzw. S2, die über je eine Steuerdiode DS1 bzw. DS2 an je einen der Emitterwiderstände RE1 bzw. RE2 angeschlossen, diesen damit parallel geschaltet sind. Außerdem ist eine Freilaufdiode FD vorgesehen, die einerseits an den Verbindungspunkt zwischen dem Entkoppelkondensator CHH und dem Schalttransistor HS und andererseits an den Ausgang HBO der Halbbrückenanordnung angeschlossen ist.

Die Schaltungsanordnung umfaßt einen weiteren Transformator, als Heiztransformator HTR bezeichnet, dessen Primärwicklung PR zwischen dem Ausgang HBO der Halbbrückenanordnung und dem Verbindungspunkt zwischen der Leuchtstofflampe FL mit dem Halbbrückenkondensator CHB angeordnet ist. Ein Paar von gegensinnig gewickelten Sekundärwicklungen H1, H2 dieses Heiztransformators HTR ist direkt jeweils mit einer der Wendeln El bzw. E2 der Leuchtstofflampe verbunden.

Über den Zeitschaltkreis ET wird der beschriebene Zusatzlastkreis mit dem weiteren Steuertransformator STR1 bei jedem Lampenstart für die vorbestimmte Dauer der Vorheizzeit zugeschaltet, indem der Schalttransistor HS leitend geschaltet wird. Damit wird für den weiteren Steuertransformator STR1 ein Strompfad geschlossen und seine Primärwicklung PR1 erregt. Seine gegensinnig gewickelten Sekundärwicklungen S1, S2 erzeugen somit Steuerspannungen, die den Emitterwiderständen RE1 bzw. RE2 der Transistorschalter HS1, HS2 der Halbbrückenanordnung als Gegenspannungen zugeführt werden. Die Große dieser Gegenspannungen ist über das Wicklungsverhältnis der Primärwicklung PR1 des weiteren Steuertransformators STR1 zu seinen Sekundärwicklungen S1 bzw. S2 einstellbar. Die so den Emitterwiderständen RE1 bzw. RE2 zugeführten Gegenspannungen bewirken ein früheres Abschalten des momentan leitenden Transistorschalters HS1 bzw. HS2, was nichts anderes bedeutet, als daß sich die Frequenz der am Ausgang HBO der Halbbrückenanordnung abgegebenen Halbbrückenspannung VHB gegenüber dem Normalbetrieb erhöht, solange der weitere Steuertransformator STR1 erregt ist. Die Größe der Frequenzerhöhung ist über die Größe der den Emitterwiderständen RE1 bzw. RE2 der Halbbrückenanordnung zugeführten Gegenspannungen.

Dies bedeutet, daß die Frequenz der die Quellenspannung für den eigentlichen Lastkreis bildenden Halbbrückenspannung VHB während der Vorheizzeit in vorbestimmter Weise höher gelegt ist als die Resonanzfrequenz des Lastkreises, die insbesondere durch die Lampendrossel LDR, den Zündkondensator CZ sowie den Halbbrückenkondensator CHB bestimmt ist. Daraus resultiert eine definierte, unterhalb der Zündspannung der Leuchtstofflampe FL liegende Lampenspannung während der Vorheizzeit. In diesem Zeitraum ist die von der momentanen Lampenspannung über den Heiztransformator HTR unabhängige Versorgung der Wendeln El, E2 der Leuchtstofflampe FL wirksam. Den Wendeln El, E2 wird dabei ein hoher Heizstrom zugeführt, der sie schnell auf Emissionstemperatur bringt. Auch hier ist die Spannung zur Heizung dieser Wendeln El, E2 über das Windungsverhältnis der Primärwicklung PR zu den Sekundärwicklungen H1 bzw. H2 des Heiztransformators HTR einstellbar. Mit dieser Schaltungsmaßnahme ist damit eine Vorheizzeit von deutlich unter 0,5 s zu erreichen. Am Ende dieser Vorheizzeit wird der Schalttransistor HS über den Zeitschaltkreis ET abgeschaltet und damit der Strompfad für den weiteren Steuertransformator STR1 unterbrochen. Die zu diesem Abschaltzeitpunkt momentan in diesem Zusatzlastkreis gespeicherte Energie wird über die Freilaufdiode FD abgeführt. Damit erniedrigt sich die Frequenz der Halbbrückenspannung VHB auf die vorbestimmte Betriebsfrequenz, woraus eine Erhöhung der an der Leuchtstofflampe FL anliegenden Lampenspannung resultiert. Die Leuchtstofflampe FL zündet, sobald sich die Zündspannung einstellt.

In Figur 2 ist ein weiteres Ausführungsbeispiel dargestellt, das in wesentlichen Teilen mit der anhand von Figur 1 beschriebenen Ausführungsform übereinstimmt, so daß hier nur auf die Unterschiede eingegangen werden muß. Bei dieser Ausgestaltung der Schaltungsanordnung ist der weitere Steuertransformator STR1 mit dem Heiztransformator HTR in einer gemeinsamen Transformatoranordnung in Form eines Steuer/Heiztransformators SHTR vereinigt. An der grundsätzlichen Funktion der Schaltungsanordnung ändert diese Schaltungsvariante an sich nichts, mit der einen Ausnahme, daß die beiden weiteren Sekundärwicklungen H1 und H2 dieses Steuer/Heiztransformators SHTR erhöhten Heizstrom für die Wendeln El bzw. E2 der Leuchtstofflampe FL nun auch nur während der Vorheizzeit liefern. Weiterhin sind in diesem Ausführungsbeispiel die genannten Sekundärwicklungen H1 bzw. H2 über jeweils eine Gleichrichterdiode DH1 bzw. DH2 an die Wendeln El bzw. E2 der Leuchtstofflampe FL angekoppelt. Wie der Vergleich der beiden Schaltungsanordnungen von Figur 1 und der Figur 2 zeigt, sind diese Gleichrichterdioden DH1 bzw. DH2 für die eigentliche Elektrodenheizung nicht unbedingt erforderlich. In der Form einfacher Gleichrichterdioden, wie in Figur 2 dargestellt, haben sie für den eigentlichen Heizvorgang eher den Nachteil, die den Wendeln El, E2 der Leuchtstofflampe FL zugeführte Energie zu halbieren. Dieser Funktionsnachteil ließe sich reduzieren, wenn man statt einfacher Gleichrichterdioden, wie dargestellt, mit allerdings etwas höherem Schaltungsaufwand eine Gleichrichterbrücke zur Vollweggleichrichtung einsetzte. Der Vorteil dieser Gleichrichtung der Heizspannungen gleicht allerdings den Nachteil des etwas höheren Schaltungsaufwandes im Verhältnis zu dem in Figur 1 dargestellten Ausführungsbeispiel aus. Denn auf diese Weise wird vermieden, daß bei einem Lampenwechsel unter Netzspannung an den Lampenelektroden unzulässig hohe Spannungen erzeugt werden. Diese Schaltungsmaßnahme erhöht damit die elektrische Sicherheit des elektronischen Vorschaltgerätes. Weiterhin bietet diese Schaltungsmaßnahme die in Figur 2 im einzelnen nicht dargestellte Möglichkeit, über eine einfache Gleichstromabfrage an den Elektroden der Leuchtstofflampe FL Betriebszustände der Leuchtstofflampe FL selbst zu überwachen. So könnte festgestellt werden, ob überhaupt eine Leuchtstofflampe eingesetzt ist oder nicht, gegebenenfalls aber auch, ob bei einer eingesetzten Leuchtstofflampe ein Wendelfehler vorliegt. Diese Funktionsvorteile gleichen bei weitem den dafür notwendigen, etwas erhöhten Schaltungsvorteil aus.

Aus Gründen der Übersichtlichkeit wurde in der Zeichnung zu beiden geschilderten Ausführungsformen im Lampenlastkreis jeweils nur eine einzige Leuchtstofflampe FL dargestellt. Denn es ist unmittelbar einzusehen, daß eine Erweiterung der Schaltungen für den gleichzeitigen Betrieb mehr als nur einer Leuchtstofflampe dadurch gegeben ist, auf dem Heiztransformator HTR bzw, dem Steuer-/Heiztransformator SHTR weitere Sekundärwicklungen, d. h. pro zu versorgender Lampenelektrode jeweils eine individuelle Heizwicklung vorzusehen.

## Patentansprüche

1. Schaltungsanordnung zum Vorheizen der Wendeln (El, E2) von mindestens einer Leuchtstofflampe (FL), die mit einem elektronischen Vorschaltgerät betrieben wird, in dem zwischen einer Gleichspannungsquelle (VZW) und einem Massebezugspotential eine Halbbrückenanordnung in Form einer Reihenschaltung zweier Leistungstransistoren (HS1, HS2) angeordnet ist, deren gemeinsamer Verbindungspunkt den Ausgang (HBO) der Halbbrückenanordnung bildet, an dem eine Halbbrückenspannung (VHB) in Form einer hochfrequenten Impulsfolge abgegeben wird und an den seriell eine Primärwicklung eines ersten Transformators (STR), über dessen Sekundärwicklungen die beiden Leistungstransistoren wechelseitig ein- bzw. ausgeschaltet werden, sowie ein andererseits an dem Massebezugspotential liegender Lastkreis mit einer Lampendrossel (LDR), der mindestens einen Leuchtstofflampe (FL), einem Zündkondensator (CZ)und einem Halbbrückenkondensator (CHB) angeschlossen ist, **gekennzeichnet durch** eine an den Ausgang (HBO) der Halbbrückenanordnung angeschlossene, während der Vorheizzeit der Wendeln aktivierbare Frequenzsteuereinrichtung (STR1, DS1, DS2, HS) zum Ableiten von zwei zueinander gegenphasigen Steuerspannungen aus der hochfrequenten Halbbrückenspannung (VHB), die jeweils einem der beiden Leistungstransistoren als Gegenspannung zum beschleunigten Abschalten zugeführt sind.

2. Schaltungsanordnung nach Anspruch 1, **dadurch gekennzeichnet**, daß die Frequenzsteuereinrichtung (STR1, DS1, DS2, HS) einen zweiten Transformator (STR1) umfaßt, dessen Primärwicklung (PR1) zwischen dem Ausgang (HBO) der Halbbrückenanordnung (HS1, HS2) und dem Massebezugspotential angeordnet ist und der ein Paar von über ihren Wicklungssinn synchronisierten Sekundärwicklungen (S1, S2) zum Erzeugen der den Leistungstransistoren (HS1, HS2) der Halbbrückenanordnung zugeführten gegenphasigen Steuerspannungen besitzt.

3. Schaltungsanordnung nach Anspruch 1 oder 2, **dadurch gekennzeichnet**, daß die von der Frequenzsteuereinrichtung (STR1, DS1, DS2, HS) erzeugten gegenphasigen Steuerspannungen jeweils den Steuerelektroden eines der beiden Leistungstransistoren (HS1, HS2) der Halbbrückenanordnung zugeführt sind.

4. Schaltungsanordnung nach Anspruch 2, **dadurch gekennzeichnet**, daß den Leistungstransistoren (HS1, HS2) jeweils ein Emitterwiderstand (RE1 bzw. RE2) zugeordnet ist und daß die Sekundärwicklungen (S1, S2) des zweiten Transformators (STR1) jeweils einem dieser Emitterwiderstände, angekoppelt über je eine Steuerdiode (DS1 bzw. DS2), parallel geschaltet sind.

5. Schaltungsanordnung nach einem der Ansprüche 3 oder 4, **dadurch gekennzeichnet**, daß in dem zwischen dem Ausgang (HBO) der Halbbrückenanordnung (HS1, HS2) und dem Massebezugspotential liegenden Strompfad der Frequenzsteuereinrichtung (STR1, DS1, DS2, HS) ein Entkopplungskondensator (CHH) sowie ein zeitabhängig gesteuertes Schaltglied (HS, ET) angeordnet sind, das derart bemessen ist, daß die Frequenzsteuereinrichtung lediglich während der Vorheizphase des elektronischen Vorschaltgerätes aktiviert ist.

6. Schaltungsanordnung nach Anspruch 5, **dadurch gekennzeichnet**, daß das zeitabhängige Schaltglied (HS,ET) als Kaltleiter ausgebildet ist.

7. Schaltungsanordnung nach Anspruch 5, **dadurch gekennzeichnet**, daß das zeitabhängige Schaltglied als Schalttransistor (HS) ausgebildet ist, dem ein an seinem Steuereingang liegendes Zeitschaltglied (ET) zugeordnet ist.

8. Schaltungsanordnung nach einem der Ansprüche 2 bis 7, **dadurch gekennzeichnet**, daß der Primärwicklung (PR1) des zweiten Transformators (STR1) eine Freilaufdiode (FD) derart gepolt parallel geschaltet ist, daß darüber die momentane Energie der Frequenzsteuereinrichtung zum Zeitpunkt ihrer Abschaltung abführbar ist.

9. Schaltungsanordnung nach einem der Ansprüche 2 bis 8, **dadurch gekennzeichnet**, daß ein dritter Transformator (HTR) vorgesehen ist, dessen Primärwicklung (PR) ebenfalls zwischen dem Ausgang (HBO) der Halbbrückenanordnung (HS1, HS2) und Massebezugspotential angeordnet ist und der ein Paar von Sekundärwicklungen (H1, H2) besitzt, die mit entsprechend synchronisiertem Wicklungssinn jeweils einer der Wendeln(E1 bzw. E2) der mindestens einen Leuchtstofflampe (FL) parallel geschaltet sind.

10. Schaltungsanordnung nach Anspruch 9, **dadurch gekennzeichnet**, daß in dem Stromkreis der Parallelschaltung je einer der Sekundärwicklungen (H1 bzw. H2) des dritten Transformators (HTR) mit einer Wendel (E1 bzw. E2) der Leuchtstofflampe (FL) jeweils eine Gleichrichterdiode (DH1 bzw. DH2) angeordnet ist.

11. Schaltungsanordnung nach Anspruch 9, **dadurch gekennzeichnet**, daß in dem Stromkreis der Parallelschaltung je einer der Sekundärwicklungen (H1 bzw. H2) des dritten Transformators (HTR) mit einer Wendel (E1 bzw. E2) der Leuchtstofflampe (FL) jeweils eine Gleichrichterbrücke angeordnet ist.

12. Schaltungsanordnung nach einem der Ansprüche 9 bis 11, **dadurch gekennzeichnet**, daß zum gleichzeitigen Betreiben mehr als einer Leuchtstofflampe (FL) jeder der Wendeln (E1, E2) dieser Leuchtstofflampen individuell eine Sekundärwicklung (z. B. H1, H2) des dritten Transformators (HTR) zugeordnet ist.

13. Schaltungsanordnung nach einem der Ansprüche 9 bis 12, **dadurch gekennzeichnet**, daß der zweite Transformator (STR1) und der dritte Transformator (HTR) als eine Steuer-/Heiztransformatoranordnung mit einer gemeinsamen, im Strompfad der Frequenzsteuereinrichtung liegenden Primärwicklung (PR) ausgebildet sind.

## Claims

1. Circuit arrangement for preheating the filaments (E1, E2) of at least one fluorescent lamp (FL), which is operated with an electronic ballast in which there is arranged, between a DC voltage source (VZW) and an earth reference potential, a half-bridge arrangement in the form of a series circuit of two power transistors (HS1, HS2), the common junction point of which forms the output (HBO) of the half-bridge arrangement, at which output a half-bridge voltage (VHB) is output in the form of a high-frequency pulse train and to which output there are connected, serially, a primary winding of a first transformer (STR), by means of whose secondary windings the two power transistors are reciprocally switched on and off, as well as a load circuit having a lamp inductor (LDR), the at least one fluorescent lamp (FL), an ignition capacitor (CZ) and a half-bridge capacitor (CHB), which load circuit is connected to the earth reference potential at the other end, characterized by a frequency control device (STR1, DS1, DS2, HS), which is connected to the output (HBO) of the half-bridge arrangement and can be activated during the preheating time of the filaments, for deriving two control voltages, in antiphase with respect to one another, from the high-frequency half-bridge voltage (VHB), which are respectively fed to one of the two power transistors as opposing voltage for accelerated switching-off.

2. Circuit arrangement according to Claim 1, characterized in that the frequency control device (STR1, DS1, DS2, HS) comprises a second transformer (STR1), whose primary winding (PR1) is arranged between the output (HBO) of the half-bridge arrangement (HS1, HS2) and the earth reference potential and which has a pair of secondary windings (S1, S2), which are synchronized by way of their winding sense, for generating the in-antiphase control voltages which are fed to the power transistors (HS1, HS2) of the half-bridge arrangement.

3. Circuit arrangement according to Claim 1 or 2, characterized in that the in-antiphase control voltages generated by the frequency control device (STR1, DS1, DS2, HS) are respectively fed to the control electrodes of one of the two power transistors (HS1, HS2) of the half-bridge arrangement.

4. Circuit arrangement according to Claim 2, characterized in that the power transistors (HS1, HS2) are assigned a respective emitter resistor (RE1 and RE2), and in that the secondary windings (S1, S2) of the second transformer (STR1) are respectively connected in parallel with one of these emitter resistors, the connection being effected in a manner coupled via a respective control diode (DS1 and DS2).

5. Circuit arrangement according to either of Claims 3 and 4, characterized in that there are arranged in the current path of the frequency control device (STR1, DS1, DS2, HS), the said current path lying between the output (HBO) of the half-bridge arrangement (HS1, HS2) and the earth reference potential, a decoupling capacitor (CHH) as well as a switching element (HS, ET) which is controlled in a time-dependent manner and is dimensioned in such a way that the frequency control device is activated only during the preheating phase of the electronic ballast.

6. Circuit arrangement according to Claim 5, characterized in that the time-dependent switching element (HS, ET) is designed as a PTC thermistor.

7. Circuit arrangement according to Claim 5, characterized in that the time-dependent switching element is designed as a switching transistor (HS), which is assigned a time switching element (ET) connected to its control input.

8. Circuit arrangement according to one of Claims 2 to 7, characterized in that a freewheeling diode (FD) is connected in parallel with the primary winding (PR1) of the second transformer (STR1), the connection being effected with polarity such that it is possible to dissipate via the said diode the instantaneous energy of the frequency control device at the instant of its switching-off.

9. Circuit arrangement according to one of Claims 2 to 8, characterized in that a third transformer (HTR) is provided, whose primary winding (PR) is likewise arranged between the output (HPO) of the half-bridge arrangement (HS1, HS2) and earth reference potential and which has a pair of secondary windings (H1, H2), which, with a correspondingly synchronized winding sense, are respectively connected in parallel with one of the filaments (E1 and E2) of the at least one fluorescent lamp (FL).

10. Circuit arrangement according to Claim 9, characterized in that a respective rectifier diode (DH1 and DH2) is arranged in the electric circuit of the parallel connection of a respective one of the secondary windings (H1 and H2) of the third transformer (HTR) to a respective filament (E1 and E2) of the fluorescent lamp (FL).

11. Circuit arrangement according to Claim 9, characterized in that a respective rectifier bridge is arranged in the electric circuit of the parallel connection of a respective one of the secondary windings (H1 and H2) of the third transformer (HTR) to a respective filament (E1 and E2) of the fluorescent lamp (FL).

12. Circuit arrangement according to one of Claims 9 to 11, characterized in that, for the simultaneous operation of more than one fluorescent lamp (FL), each of the filaments (E1, E2) of these fluorescent lamps is individually assigned a secondary winding (e.g. H1, H2) of the third transformer (HTR).

13. Circuit arrangement according to one of Claims 9 to 12, characterized in that the second transformer (STR1) and the third transformer (HTR) are designed as a control/heating transformer arrangement with a common primary winding (PR) lying in the current path of the frequency control device.

## Revendications

1. Circuit pour le préchauffage des électrodes (E1, E2) d'au moins une lampe fluorescente (FL) qui fonctionne avec un stabilisateur électronique, dans lequel il est agencé entre une source de tension continue (VZW) et un potentiel de référence de masse un montage en demi-pont sous la forme d'un circuit série composé de deux transistors de puissance (HS1, HS2) dont le point de jonction commun forme la sortie (HBO) du montage en demi-pont, sortie à laquelle est délivrée une tension de demi-pont (VHB) sous la forme d'une séquence d'impulsions à haute fréquence et à laquelle est raccordé en série un enroulement primaire d'un premier transformateur (STR), dont les enroulements secondaires servent à connecter ou déconnecter en alternance les deux transistors de puissance, ainsi qu'un circuit de charge se trouvant de l'autre côté au potentiel de référence de masse et comportant un ballast inductif (LDR), la ou les lampes fluorescentes (FL), un condensateur d'allumage (CZ) et un condensateur de demi-pont (CHB), caractérisé par un dispositif de commande de fréquence (STR1, DS1, DS2, HS), raccordé à la sortie (HBO) du montage en demi-pont et pouvant être activé pendant le temps de préchauffage des électrodes, pour déduire de la tension de demi-pont à haute fréquence (VHB) deux tensions de commande en opposition de phase qui sont envoyées chacune à l'un des deux transistors de puissance comme tension contraire pour la déconnexion accélérée.

2. Circuit selon la revendication 1, caractérisé par le fait que le dispositif de commande de fréquence (STR1, DS1, DS2, HS) comprend un deuxième transformateur (STR1) dont l'enroulement primaire (PR1) est disposé entre la sortie (HBO) du montage en demi-pont (HS1, HS2) et le potentiel de référence de masse et qui a une paire d'enroulements secondaires (S1, S2) synchronisés par l'intermédiaire de leur sens d'enroulement pour produire les tensions de commande en opposition de phase envoyées aux transistors de puissance (HS1, HS2) du montage en demi-pont.

3. Circuit selon la revendication 1 ou 2, caractérisé par le fait que les tensions de commande en opposition de phase produites par le dispositif de commande de fréquence (STR1, DS1, DS2, HS) sont envoyées chacune aux électrodes de commande de l'un des deux transistors de puissance (HS1, HS2) du montage en demi-pont.

4. Circuit selon la revendication 2, caractérisé par le fait qu'il est associé aux transistors de puissance (HS1, HS2) chaque fois une résistance d'émetteur (RE1, RE2) et que les enroulements secondaires (S1, S2) du deuxième transformateur (STR1) sont branchés en parallèle chaque fois avec l'une de ces résistances d'émetteurs, en étant couplés par l'intermédiaire d'une diode de commande (DS1 ou DS2) chaque fois.

5. Circuit selon l'une des revendications 3 ou 4, caractérisé par le fait qu'il est disposé dans le chemin de courant, entre la sortie (HBO) du montage en demi-pont (HS1, HS2) et le potentiel de référence de masse, du dispositif de commande de fréquence (STR1, DS1, DS2, HS) un condensateur de découplage (CHH) et un élément de commutation (HS, ET) commandé en fonction du temps et dimensionné de telle sorte que le dispositif de commande de fréquence est activé simplement pendant la phase de préchauffage du stabilisateur électronique.

6. Circuit selon la revendication 5, caractérisé par le fait que l'élément de commutation (HS, ET) dépendant du temps est conçu comme un thermistor PTC.

7. Circuit selon la revendication 5, caractérisé par le fait que l'élément de commutation dépendant du temps est conçu comme un transistor de commutation (HS) auquel est associé un élément de temporisation (ET) se trouvant à l'entrée de commande de ce transistor de commutation.

8. Circuit selon l'une des revendications 2 à 7, caractérisé par le fait qu'une diode de roue libre (FD) est branchée en parallèle avec l'enroulement primaire (PR1) du deuxième transformateur (STR1) et avec une polarisation telle que l'énergie momentanée du dispositif de commande de fréquence à l'instant de sa déconnexion peut être évacuée par l'intermédiaire de cette diode de roue libre.

9. Circuit selon l'une des revendications 2 à 8, caractérisé par le fait qu'il est prévu un troisième transformateur (HTR) dont l'enroulement primaire (PR) est également disposé entre la sortie (HBO) du montage en demi-pont (HS1, HS2) et le potentiel de référence de masse et qui a une paire d'enroulements secondaires (H1, H2) qui sont branchés en parallèle, avec un sens d'enroulement synchronisé en conséquence, chaque fois avec l'une des électrodes (E1, E2) de la ou des lampes fluorescentes (FL).

10. Circuit selon la revendication 9, caractérisé par le fait qu'une diode de redressement (DH1, DH2) est disposée chaque fois dans le circuit de courant du circuit parallèle respectivement de l'un des enroulements secondaires (H1 ou H2) du troisième transformateur (HTR) comportant une électrode (El ou E2) de la lampe fluorescente (FL).

11. Circuit selon la revendication 9, caractérisé par le fait qu'un redresseur en pont est disposé chaque fois dans le circuit de courant du circuit parallèle respectivement de l'un des enroulements secondaires (H1, H2) du troisième transformateur (HTR) comportant une électrode (E1 ou E2) de la lampe fluorescente (FL).

12. Circuit selon l'une des revendications 9 à 11, caractérisé par le fait que, pour le fonctionnement simultané de plus d'une lampe fluorescente (FL), un enroulement secondaire (par exemple H1, H2) du troisième transformateur (HTR) est associé individuellement à chacune des électrodes (E1, E2) de ces lampes fluorescentes.

13. Circuit selon l'une des revendications 9 à 12, caractérisé par le fait que le deuxième transformateur (STR1) et le troisième transformateur (HTR) sont mis en oeuvre sous la forme d'un dispositif transformateur de commande et de chauffage avec un enroulement primaire commun (PR) se trouvant dans le chemin de courant du dispositif de commande de fréquence.
